# EUROPÄISCHE PATENTSCHRIFT

(11) **EP 1 693 318 B1**
(45) Veröffentlichungstag und Bekanntmachung des Hinweises auf die Patenterteilung: **22.10.2008**
(21) Anmeldenummer: 06002970.9
(22) Anmeldetag: 14.02.2006
(51) Int. Cl.: B65G 1/07, B62B 3/14

(54) **Einkaufswagen und Behältersystem**
Shopping trolley and container system
Chariot d'achat et système de conteneurs

(30) Priorität: 17.02.2005 DE 102005007115
(43) Veröffentlichungstag der Anmeldung: 23.08.2006
(73) Patentinhaber: J.Eiche Management- und Beratungsges. mbH, 82152 Krailing (DE)
(72) Erfinder: Eiche, Jürgen, 82152 Krailing (DE)

(56) Entgegenhaltungen:
- WO-A-00/44603
- AT-U1- 7 098
- DE-A1- 19 729 754
- DE-B- 1 208 249
- DE-C1- 10 158 171
- US-A- 2 944 672
- US-A- 3 197 224
- US-A- 3 429 403

## Beschreibung

### Hintergrund der Erfindung

Die Erfindung betrifft einen Einkaufswagen und Behältersystem zum Transport von Waren in Selbstbedienungs-Supermärkten, Einkaufszentren oder dgl., bestehend aus einem Wagen mit länglicher Basis, 4 Rädern, einem Handgriff und einer nach allen Seiten und nach oben offenen Plattform.

Der erfindungsgemäße Einkaufswagen ist anstelle der bekannten großvolumigen Einkaufskörbe mit einer höhenverstellbaren Plattform ausgestattet, die eine oder mehrere flache Behälter übereinander gestapelt aufnehmen kann. Diese Konstruktion ermöglicht eine wesentliche Vereinfachung und Beschleunigung des Einkaufsvorgangs, insbesondere dann, wenn die Kassen des Geschäftes mit Barcode-Lesegeräten ausgestattet sind.

Bekannt ist ein Einkaufsvorgang, bei dem der Kunde den Korb des Einkaufswagens nach und nach belädt. Nach Abschluss des Beladens werden die Waren am Entladebereich der Kassenstation vom Kunden aus dem Wagen genommen und dem Kassenterminal ggf. mit Hilfe von Transportbändern zugeführt, wo sie vom Kassierer- meist mittels eines Barcode-Lesegeräts - erfasst werden. Der Kunde belädt üblicherweise währenddessen seinen leeren Einkaufswagen mit der erfassten Ware und packt ihn danach in kleinere Behältnisse wie Tüten oder Taschen. Wird der Einkauf mit dem PKW getätigt, so wird die Ware anschließend in den Kofferraum des Fahrzeugs umgeladen.

WO 00/44603 offenbart einen oberbegriffsmäßigen Einkaufswagen, in dessen Einkaufskorb eine ladungsabhängig in der Höhe verstellbare Plattform eingebaut wird und der trotz dieser Mechanik stapelbar ist. Die eingekauften Waren werden auf die Plattform im Einkaufskorb gelegt und zur Kassenerfassung herausgenommen und anschließend zurückgelegt.

US 3,429,403 offenbart einen Einkaufswagen mit einer nach vorne offenen Plattform. Auf dieser befindet sich eine (stapelbare) Einkaufsbox, die am Kassenterminal zur Erfassung der Waren auf das Transportband geschoben wird. Nach der Erfassung wird die Box wieder auf die Plattform befördert.

DE 10158171 C1 offenbart einen Einkaufswagen mit einem Gestell und einem separierbaren Aufnahmeteil, wobei der Aufnahmeteil hydraulisch und/oder pneumatisch bewegt oder verschwenkt werden kann. Der Aufnahmeteil kann aus dem Gestell herausgehoben und in den Kofferraum eines mitgeführten PKW hinabgesenkt werden.

DE 1969908U offenbart einen Einkaufswagen, der einen höhenverstellbaren Einkaufsbehälter mit besonders großer Tiefe und somit hohem Fassungsvermögen ausweist. Der Behälter wird je nach Füllung durch eine unter dem Behälterboden angebrachte Feder auf oder ab bewegt.

Der bisher übliche Ablauf hat mehrere Nachteile, die erfindungsgemäß vermieden werden sollen. So muss der Kunde jedes zu kaufende Produkt mehrmals einzeln handhaben. Bei technischer Ausstattung des Kassenterminals mit Barcode-Lesegeräten müssen die Artikel vom Kassenpersonal einzeln durch den Scanner-Bereich durchgezogen oder angehoben und gedreht werden, bis der Barcode vom Lesegerät erkannt wird. Außerdem hat der Kunde bei größeren Einkäufen häufig keine Möglichkeit, den Kassenvorgang komplett zu überwachen, wenn der Kassierer mit dem Erfassen der Artikel beginnt, bevor der Kunde alle Artikel aus dem Einkaufswagen aufs Band gelegt hat. Unangenehmer Zeitdruck kann dadurch entstehen, dass ein geübter Kassierer schneller erfasst, als der Kunde die Ware in den Einkaufswagen legen kann.

Abriss der Erfindung Die Aufgabe der vorliegenden Erfindung besteht darin, einen Einkaufswagen mit dazugehörigem Behältersystem zu entwickeln, der das Be- und Entladen vor und nach dem Kassenvorgang sowie das Umpacken in Tüten, Taschen, etc. vermeidet und ggf. das Umpacken in einen PKW-Kofferraum erleichtert. Weitere Aufgabe der Erfindung ist es, das Kassenpersonal von der physischen Belastung beim Erfassen der einzelnen Artikel zu befreien. Gleichzeitig soll der gesamte Kassenvorgang beschleunigt werden. Darüber hinaus soll der Einkauf emotional positiver verlaufen, indem der unangenehme Zeitdruck beim Kassenvorgang vermieden wird.

Die Aufgabe wird durch die Merkmale des Anspruchs 1 gelöst.
Der Einkaufswagen ist mit einer höhenverstellbaren Plattform ausgestattet, die an einem umlaufenden Tragseil, einer Kette, o.ä., die in den senkrechten Stützen und dem Rahmen des Wagens verläuft, angebracht ist. Diese Plattform kann einen oder mehrere flache Behälter übereinander gestapelt aufnehmen. Die Höhe wird vom Kunden je nach Anzahl der auf dieser Plattform gestapelten Behälter so eingestellt, dass der oberste Behälter jeweils in bequemer Beladehöhe liegt. Die erfindungsgemäß zu verwendenden Behälter haben eine Größe, die etwa der Grundfläche der Körbe der bisherigen Einkaufswagen entspricht, bestehen aus einem festen und leichten Material wie z.B. Kunststoff und sind in sich und aufeinander stapelbar. Sie weisen eine geringe Tiefe von beispielsweise 10-15 cm auf. Die typischen und bewährten technischen Merkmale und Vorteile bekannter Einkaufswagen, wie Ineinanderschieben zum Zweck des Platz sparenden Parkens, Kindersitz und Ablagefläche für größere Artikel werden beibehalten.

Im Folgenden wird der durch die Erfindung ermöglichte verbesserte Ablauf beschrieben: Der Handel stellt eine ausreichende Anzahl erfindungsgemäßer Einkaufswagen bereit. Diese können sowohl als zusätzlicher Wagentyp als auch ausschließlich Verwendung finden. Außerdem werden in der Nähe des Eingangs und in der Nähe der bereitgestellten Einkaufswagen - ggf. auch im Geschäft an zentralen Punkten - Behälter deponiert, die die Kunden dort entnehmen können. Denkbar sind verschiedene Ausgabeformen, wie Ausleihe gegen Pfand oder Verkauf der Behälter.

Die leeren Behälter werden entweder vom Kunden mitgebracht (beim vorherigen Einkauf geliehen oder gekauft) oder den Behälter-Depots im Geschäft entnommen. Mitgebrachte sowie den Depots entnommene Behälter können während des Einkaufs im erfindungsgemäßen Einkaufswagen untergebracht werden, bis sie benötigt werden. Bei Kauf eines Behälters wird dieser an der Kasse gekennzeichnet, z.B. durch Barcode-Aufkleber; er kann dadurch beim nächsten Einkauf von neu zu erwerbenden Behältern unterschieden werden.
Um das Beladen möglichst bequem zu machen, bringt der Kunde vor Beginn des Einkaufs die Plattform in die oberste Position. Dann legt er einen ersten Behälter auf die Plattform und belädt ihn so, dass die Artikel nur nebeneinander liegen. Die geringe Tiefe der Behälter unterstützt das Erfordernis. Waren nur in einer Schicht in die Behälter zu legen. Artikel, die liegend eine größere Höhe haben als es die Stapelhöhe der Behälter zulässt, müssen auf einer der Ablagen untergebracht werden.

Der aufgedruckte Barcode muss nach oben zeigen. Da auf vielen Produkten Barcodes auf mehreren Verpackungsseiten aufgedruckt sind, wird dem Kunden nur wenig Mühe abverlangt, die Produkte in die erforderliche Position zu bringen.

Wenn der erste Behälter in dieser Weise beladen ist, wird die Plattform vom Kunden mittels einer Verstellkurbel eine Ebene nach unten bewegt. Auf den beladenen Behälter wird ein weiterer Behälter gestapelt; eine gleich bleibende und bequeme Beladehöhe ist dadurch gegeben. Nach Abschluss des Einkaufens und Befüllen des letzten Behälters fährt der Kunde mit seinem Einkaufswagen zur Kasse, schiebt den obersten Behälter auf das Transportband und bewegt anschließend die Plattform auf die nächst höhere Position, um den nächsten Behälter höhengleich auf das Transportband schieben zu können. Er verfährt nun sinngemäß mit allen weiteren beladenen Behältern.

Durch die oben beschriebene Anordnung der Waren (nebeneinander liegend; Barcode nach oben) kann der Kassierer die Waren mit einem von oben lesenden Scanner erfassen, ohne sie aus den Behältern zu entnehmen. Waren, deren Barcode nicht nach oben zeigt, werden zur Erfassung in die richtige Position gebracht; Waren die keinen Barcode haben (z.B. an der Kasse abzuwiegende Frischware) werden wie bisher einzeln erfasst.

Hinter der Kasse schiebt der Kunde die Behälter mit den erfassten Waren auf die Plattform seines Einkaufswagens. Die Plattform befindet sich vom Entladevorgang noch in oberster Stellung; der erste Behälter kann bequem von der Kassenstation auf die Plattform des Einkaufswagens geschoben werden. Sukzessive werden die erfassten Behälter auf dem jeweils obersten Behälter des Einkaufswagens gestapelt; dabei wird die Plattform nach und nach mittels der Verstellkurbel abwärts bewegt. Im weiteren Verlauf können die Behälter in den Kofferraum eines Pkw geladen werden; auch hier können sie gestapelt werden. Wenn der Kunde die Behälter nicht mit nach Hause nehmen möchte, kann er sie nach dem Umpacken der Ware in eigene Behältnisse sofort an der Kasse gegen Erstattung der Pfandgebühr zurückgeben.

### Beschreibung der bevorzugten Ausführungsform

Vorteile ergeben sich aus der nachfolgenden Beschreibung der in den Zeichnungen dargestellten bevorzugten Ausführungsform des erfindungsgemäßen Einkaufswagens.
Es zeigen:
- Fig. 1: eine räumliche Darstellung des Einkaufswagens mit einem Behälter in oberer (Belade-) Position
- Fig. 2: Einkaufswagen in seitlicher Ansicht ohne Behälter
- Fig. 3: Einkaufswagen in seitlicher Ansicht mit einem Behälter, zwei gestapelten Reservebehältern und einem Kindersitz
- Fig. 4: Einkaufswagen in seitlicher Ansicht mit vier Behältern
- Fig. 5: zwei ineinander geschobene Einkaufswagen in seitlicher Ansicht
- Fig. 6: eine Ansicht des Einkaufswagens von hinten
- Fig. 7: eine Sicht auf den Einkaufswagen von oben
- Fig. 8: den Verlauf des Tragseils durch die vier Stützen und den Klapprahmen
- Fig. 9: den Tragseilverlauf, die Befestigung der Plattform und die Verstellmechanik

### Im Einzelnen:

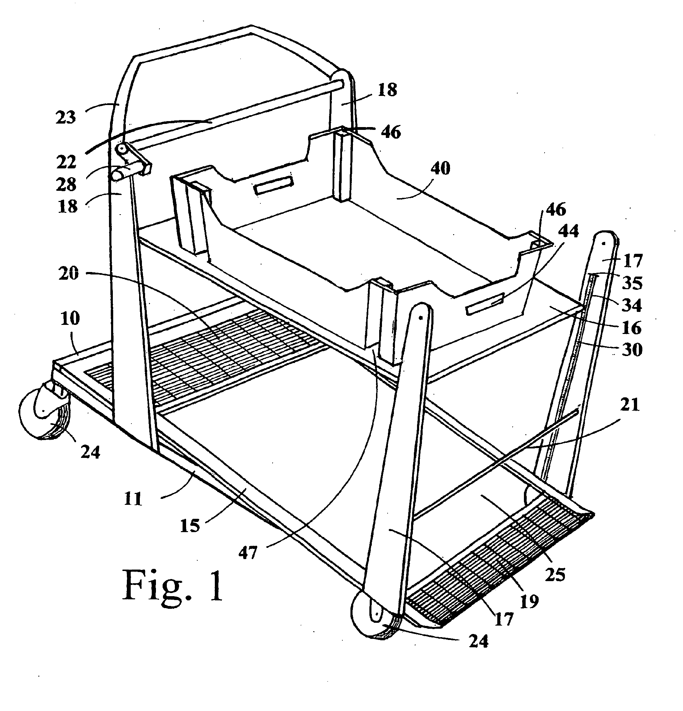

Fig. 1 ist eine räumliche Darstellung des Einkaufswagens mit einem Behälter **40** in oberer (Belade-) Position. Der Behälter **40** liegt auf einer Plattform **16,** die an den vier Stützen **17** und **18** befestigt ist. Mittels einer Verstellkurbel **28** kann die Höhe der Plattform (und mit ihr die auf ihr befindliche Behälter **40)** eingestellt werden. Die Behälter **40** sind mit Grifföffnungen **44** versehen. Der Einkaufswagen wird am Handgriff **23** geführt und ist mit zwei Ablagen **19** und **20** ausgestattet. Die vier Räder **24,** von denen wenigstens zwei beweglich ausgebildet sind, sind in der Nähe der Eckpunkte des Rahmens angebracht. Der Klapprahmen **15** weist einen offnen Boden **25** auf, damit hier keine Gegenstände abgelegt werden und das Absenken der Plattform 16 behindern können. Auf der Innenseite einer der vorderen Stützen **17** ist der Führungsschlitz **34** sowie der obere Anschlagpunkt **35** erkennbar. In den vier Stützen **17** und **18** wird das Tragseil **30** geführt; Führungsschlitze **34** ermöglichen das Auf- und Abgleiten der Befestigung der Plattform **16** am Tragseil **30.** Der Rahmen **10** des erfindungsgemäßen Einkaufswagens besteht aus zwei Längsstangen **11** und die sie verbindenden Querstangen.

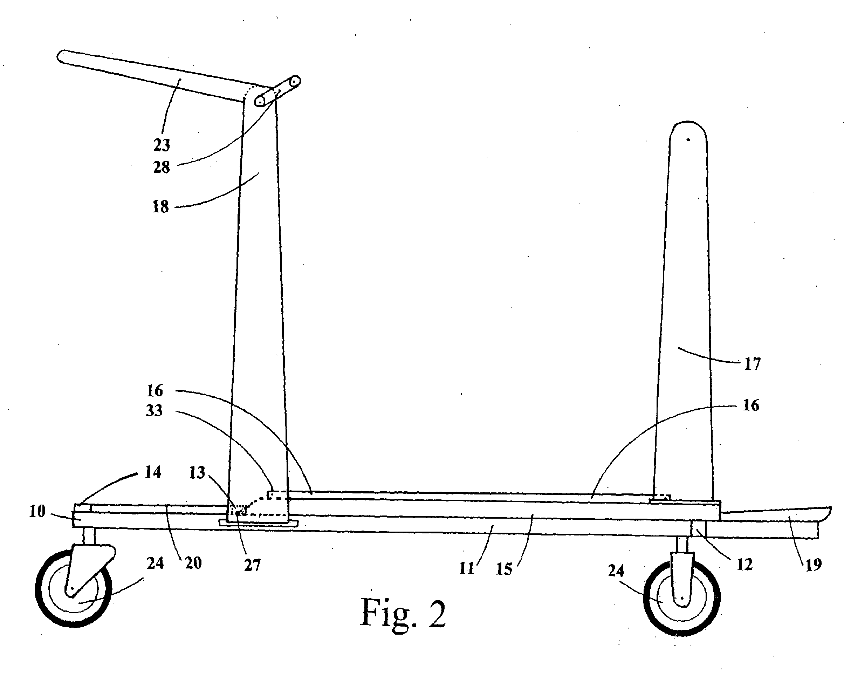

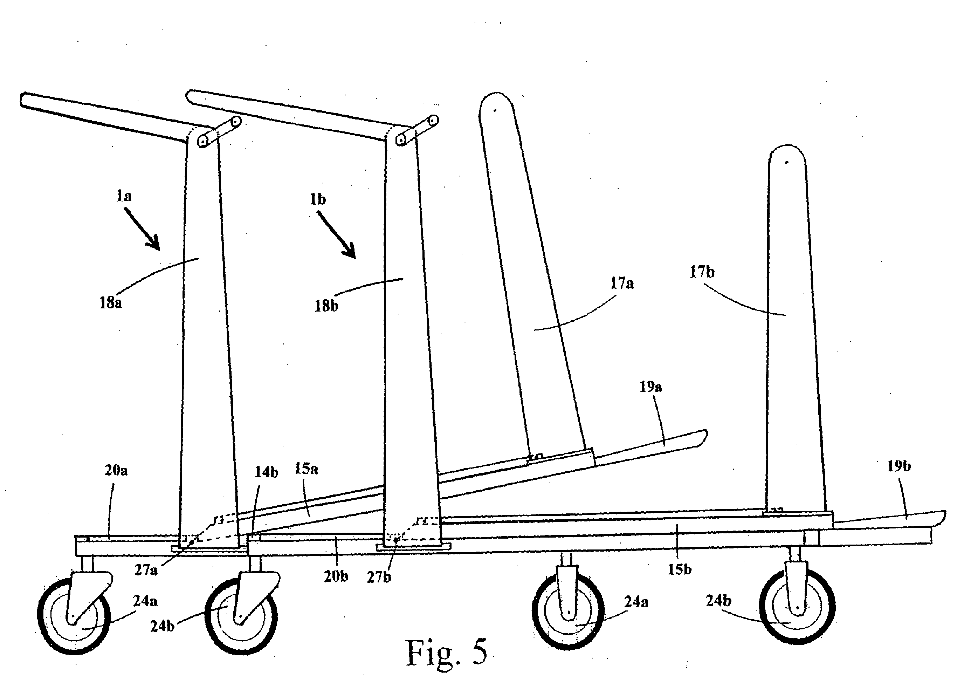

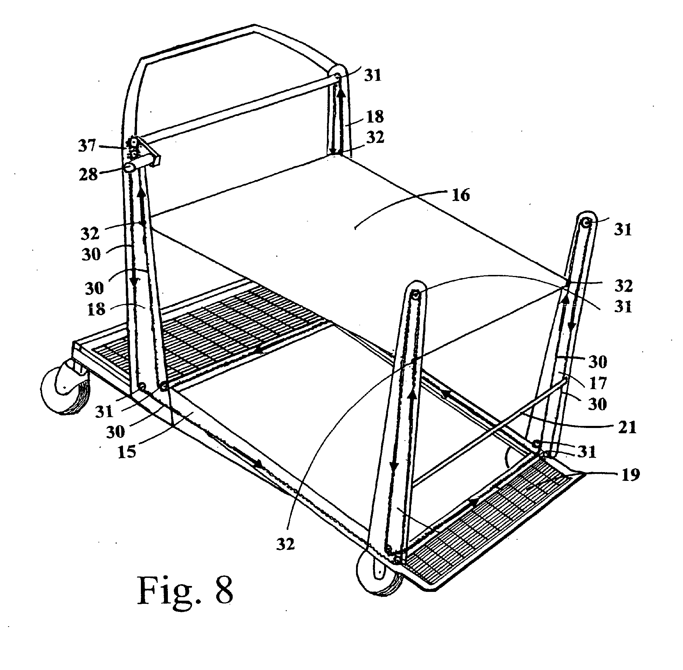

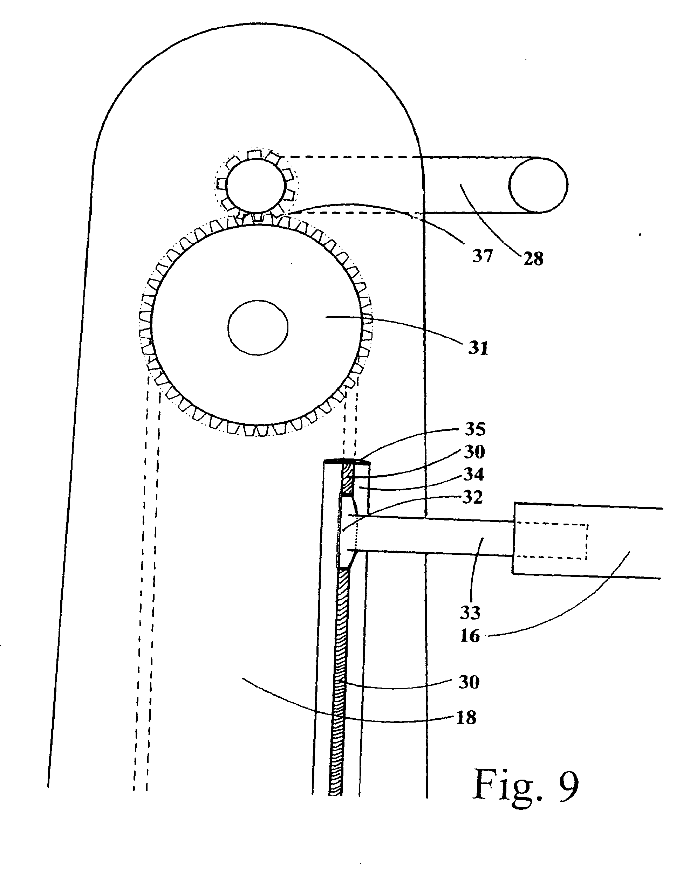

Fig. 2 zeigt eine bevorzugte Ausführungsform des Einkaufswagens in seitlicher Ansicht. Der Rahmen **10** des Einkaufswagens besteht aus zwei formstabilen seitlichen Längsstangen **11,** die am vorderen und hinteren Ende sowie im hinteren Bereich durch Querstangen verbunden sind. Während die vordere Querstange **12** höhengleich an den Längsstangen angebracht ist, sind mittlere Querstange **13** und hintere Querstange **14** auf die Längsstangen aufgesetzt. Die Räder **24** sind vorzugsweise in der Nähe der vorderen und hinteren Querstangen angebracht. Zumindest ein Radpaar - in dieser Abbildung das in Fahrtrichtung hintere - ist zur Kurvenfahrt beweglich konstruiert. Die hintere Ablage **20** und die vordere Ablage **19** sind zur Beförderung größerer Artikel und zur Aufnahme nicht benötigter Behälter vorgesehen. Auf der vorderen Querstange **12** sowie auf den Längsstangen **11** liegt der Klapprahmen **15** lose auf. Er ist mit der mittleren Querstange **13** durch ein Scharnier **27** verbunden und mit einer nach oben gebogenen vorderen Ablage **19** versehen. Auf diese Weise ist es möglich, dass sich der Klapprahmen **15** beim Ineinanderschieben der Einkaufswagen (vgl. Fig. 5) über die hintere Querstange **14** eines anderen Einkaufswagens schieben und nach oben hochklappen kann. Die vorderen Stützen **17** sind auf den vorderen Eckbereichen des Klapprahmens **15** befestigt und bewegen sich beim Ineinanderschieben der Einkaufswagen, wie in Figur 5 dargestellt, mit dem Klapprahmen **15** nach oben. Die hinteren Stützen **18** sind auf den Längsstangen **11** des Rahmens angebracht und behalten beim Stapelvorgang ihre Position unverändert bei. Die Stützen **17** und **18** sind bevorzugt so konstruiert, dass sie dem Gewicht vollbeladener Behälter widerstehen und außerdem das Tragseil **30** samt zugehöriger Umlaufrollen **31** (siehe hierzu Fig. 8 und 9) aufnehmen können. Die vorderen Stützen **17** haben eine niedrigere Höhe als die hinteren Stützen **18,** um ein Ineinanderschieben mehrerer Einkaufswagen zu ermöglichen. Die in den Figuren dargestellte, sich nach oben konisch verjüngende Form der Stützen **17** und **18** stellt eine bevorzugte Ausgestaltung dar; andere geeignete Formen und Abmessungen können zur Anwendung kommen. Die Plattform **16** besitzt bevorzugt eine rutschfeste Oberfläche, um ein Verrutschen der Behälter zu verhindern. Stattdessen oder zusätzlich kann sie über eine umlaufende Lippe verfügen, die die gleiche Funktion erfüllen kann. In unterster Stellung liegt die Plattform **16** auf dem Klapprahmen **15** auf. Die oberen Enden der hinteren Stützen **18** sind durch den Verbindungsholm **22** und den Handgriff **23** miteinander verbunden. An einer der beiden Stützen **18,** bevorzugt der rechten, ist die zur Höhenverstellung der Plattform **16** benötigte Verstellkurbel 28 befestigt.

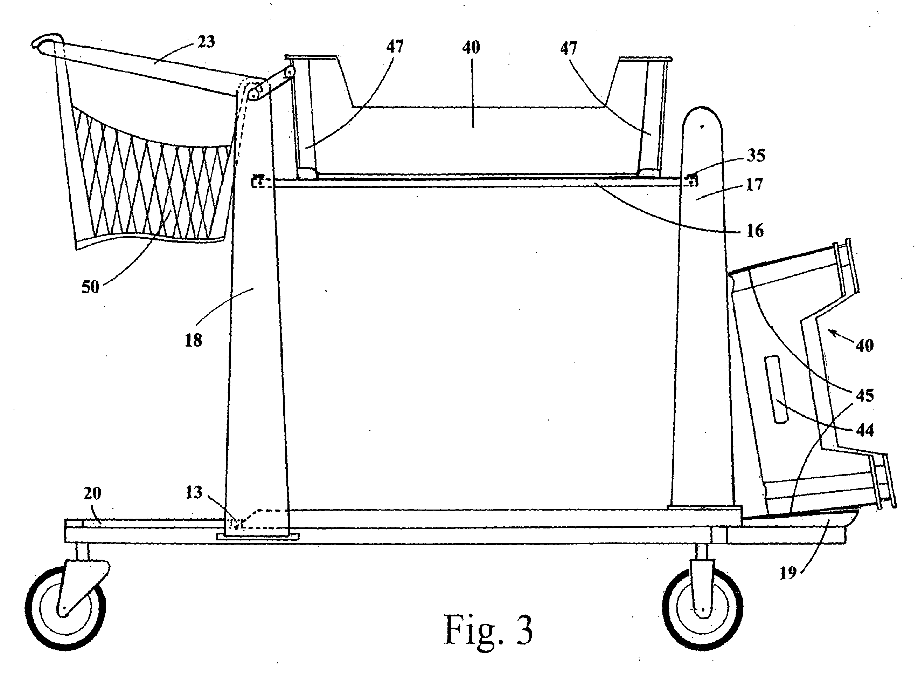

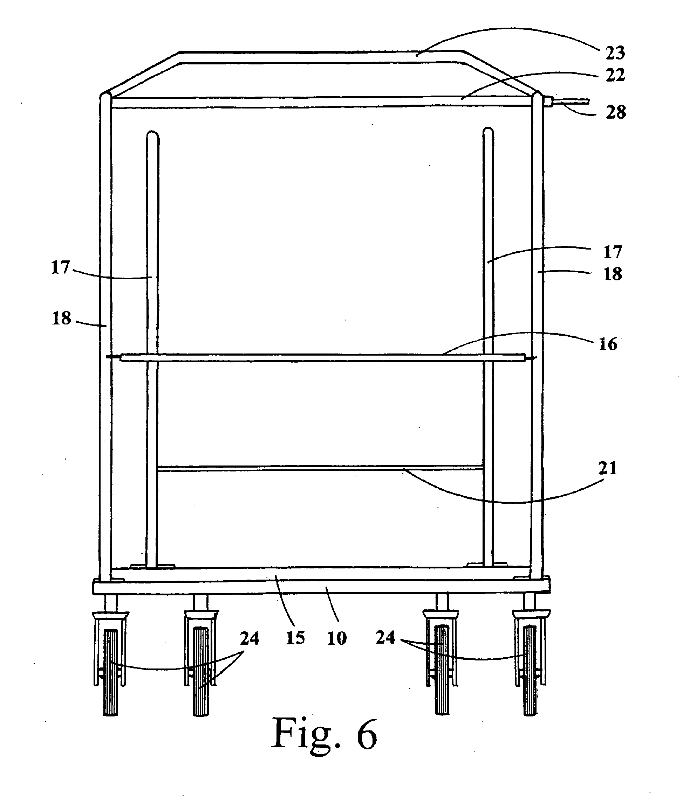

Fig. 3 zeigt den Einkaufswagen in seitlicher Ansicht, wobei sich die Plattform **16** in der höchstmöglichen Position am oberen Anschlagpunkt **35** befindet und einen Behälter **40** trägt. Die Höheneinstellung wird vom Kunden selbst frei gewählt und mittels der Verstellkurbel **28** bewirkt. Vorteilhaft ist es, wenn sich der jeweils obere zu beladende Behälter in einer Höhe befindet, die ein bequemes Beladen der Behälter **40** ermöglicht. Auf der vorderen Ablage **19** sind beispielhaft zwei nicht benötigte Behälter **40** gestapelt. Durch die bevorzugte Neigung der Seitenwände **45** der Behälter können sie ohne weitere Befestigung einzeln oder ineinander gestapelt in Querlage stabil gegen die vorderen Stützen **17** gelehnt werden, sofern die bevorzugte Ausgestaltung, wie hier vorgeschlagen, einen Abstand der Stützen **17** voneinander vorsieht, der kleiner ist als das Längsmaß der Behälter **40.** Die hintere Ablage **20** ist mit einem stabilen Boden versehen und kann größere Artikel aufnehmen. Außerdem besteht die Möglichkeit, einen Kindersitz **50** am Einkaufswagen anzubringen. Er kann am Verbindungsholm **22** und an der Stange des Handgriffs **23** angebracht oder eingehängt werden. Sofern der Kindersitz eine Breite aufweist, der geringer ist als der Abstand der vorderen Stützen **17** zueinander - wie aus Fig. 6 der hier vorgeschlagenen bevorzugten Ausführungsform erkennbar-, kann zum Zwecke des Stapelns des Einkaufswagens darauf verzichtet werden, den Kindersitz in an sich bekannter Art und Weise in Fahrtrichtung nach vorne klappbar auszugestalten. Vielmehr werden die vorderen Stützen **17** beim Stapelvorgang innerhalb der hinteren Stützen **18** und außerhalb der seitlichen Begrenzung des Kindersitzes hindurchgeführt; ein Kindersitz kann somit das Stapeln der Einkaufswagen nicht beeinträchtigen. In einer bevorzugten Ausgestaltung ist der Kindersitz so an Verbindungsholm **22** und Handgriff **23** befestigt, dass die Füße eines im Kindersitz untergebrachten Kleinkindes die ggf. auf der Ablage **20** gestapelten Artikel nicht berühren und umwerfen können.

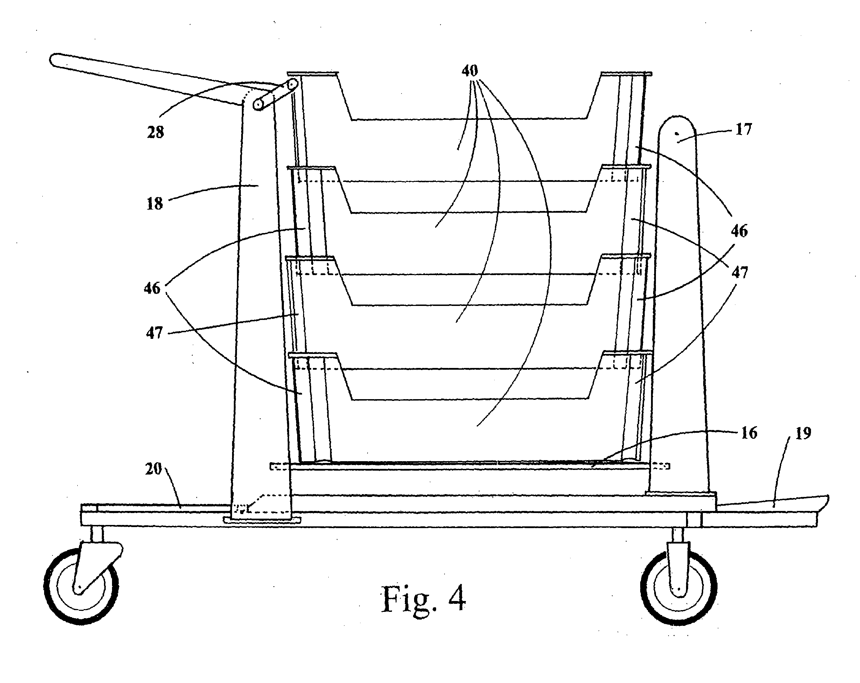

Fig. 4 zeigt die Plattform **16** in einer unteren Position mit vier gestapelten Behältern **40.** In dieser Darstellung wird angenommen, dass die drei unteren Behälter bereits beladen sind; der vierte oberste Behälter **40** befindet sich in einer zum Beladen bequemen Höhe.

Hinsichtlich des Materials sowie der Form und Gestaltung der an sich bekannten Behälter **40** bieten sich verschiedene Möglichkeiten an. Die Behälter sollen in bekannter Weise sowohl aufeinander als auch in sich stapelbar ausgestaltet sein. Dies wird üblicherweise durch Abstandshalter **46** und Aussparungen **47,** die asymmetrisch angeordnet sind, erreicht. Es kann zweckmäßig sein, den Boden **41** der Behälter **40** so zu gestalten, dass ein Hin- und Herrollen der hierin befindlichen Waren vermieden wird, beispielsweise durch geriffelten oder gewellten Belag, Noppenbelag, oder dergleichen. Die Seitenwände **45** der Behälter sind nach außen geneigt, um einerseits eine Stapelbarkeit zu ermöglichen und andererseits ein befestigungsloses Aufbewahren auf der vorderen Ablage **19** zu ermöglichen. Um die Behälter **40** leicht tragen zu können, sind sie bevorzugt mit Grifföffnungen **44,** die als Vertiefungen oder Aussparungen in der Mitte der Querseiten ausgebildet sind, versehen. Die Behälter **40** sollten bei möglichst geringem Eigengewicht so stabil sein, dass sie über eine ausreichende Tragfähigkeit verfügen. Als Material kommt vorzugsweise Kunststoff oder Drahtgeflecht in Frage.

Fig. 5 zeigt zwei Einkaufswagen **1 a** und **1 b** in seitlicher Ansicht, wobei der im Bild links befindliche Einkaufswagen **1a** in Parkposition zu sehen ist. Das Ineinanderschieben der Einkaufswagen wird durch zwei Komponenten ermöglicht: Zum einen wird der Klapprahmen **15a** des hinteren Wagens **1a,** der am Scharnier **27a** beweglich angebracht ist, mit Hilfe der nach oben weisenden vorderen Ablage **19a** über die hintere Querstange **14b** des vor diesem befindlichen Wagens **1 b** gehoben. Zum anderen verjüngt sich der Rahmen **10** der erfindungsgemäßen Einkaufswagen nach vorne in der Weise, dass die - in dieser Figur nicht erkennbare - vordere Querstange **12a** in den Rahmen **10b** des vorderen Wagens geschoben werden kann. Da die vordere Stütze **17a** auf dem Klapprahmen **15a** befestigt ist, hebt sie sich mit diesem beim Ineinanderschieben nach oben. Die vorderen Stützen **17** sind niedriger als die lichte Höhe des die Stützen **18** verbindenden Holmes **22,** um ein Ineinanderschieben der Einkaufswagen zu ermöglichen.

Fig. 6 zeigt eine Ansicht des Einkaufswagens von hinten. Die Räder **24** sind in den Eckbereichen des Rahmens **10** angebracht. Auf diesem ruhen die hinteren Stützen **18.** Der Klapprahmen **15,** der beweglich auf dem Rahmen **10** aufliegt, trägt die vorderen Stützen **17.** Die Stützen **18** werden durch den Verbindungsholm **22** und den Handgriff **23** miteinander verbunden, die vorderen Stützen **17** durch den Verbindungsholm **21.** Die Verstellkurbel **28** ist an einem der beiden Stützen **18,** bevorzugt an der rechten, angebracht. Die Plattform **16** ist beispielhaft in einer mittelhohen Stellung dargestellt.

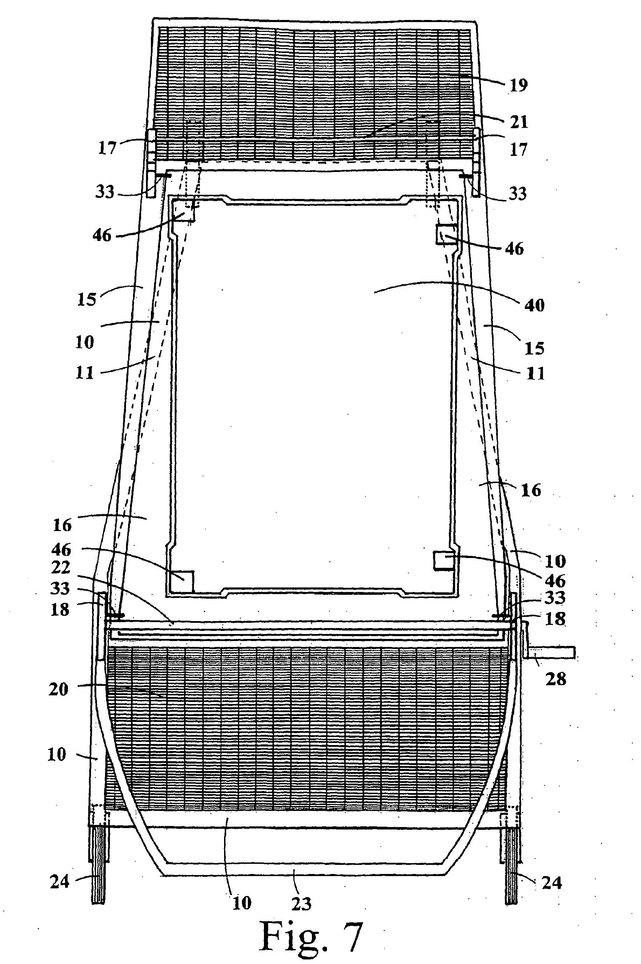

Fig. 7 zeigt eine Sicht auf den Einkaufswagen von oben mit dem Rahmen **10,** der in dieser Darstellung teilweise verdeckt ist, dem Klapprahmen **15,** der Plattform **16** und einem Behälter **40** mit den asymmetrisch angebrachten Abstandshaltern **46.** Der Klapprahmen **15** ragt nach vorne über den Rahmen **10** hinaus. Der Wagen wird auf vier Rädem **24** bewegt; die vorderen Räder **24** sind hier verdeckt. Die vorderen Stützen **17** sind auf dem nach oben beweglichen Klapprahmen **15** befestigt. Die hinteren Stützen **18** sind dagegen auf der Längsstange **11** des Rahmens **10** befestigt. Der seitliche Abstand der Stützen **17** und **18** zueinander ist so bemessen, dass die vorderen Stützen **17** beim Ineinanderschieben durch die hinteren Stützen **18** geführt werden können. Der Rahmen **10** verjüngt sich nach vorne in einem Maß, das das Ineinanderschieben mehrerer Einkaufswagen ermöglicht. Die Ablagen **19** und **20** sind mit einem stabilen Boden, beispielsweise mit einem Drahtgeflecht, versehen, um nicht benötigte (leere) Behälter bzw. größere Artikel aufzunehmen. Zwischen den vorderen Stützen **17** bzw. hinteren Stützen **18** befindet sich der Verbindungsholm **21** bzw. **22,** der die Stabilität der Stützen **17 bzw.18** erhöht. Zum Schieben des Einkaufswagens befindet sich der an den hinteren Stützen **18** befestigte Handgriff **23.** Die Verstellkurbel **28** dient zur Höhenveränderung der Plattform **16** und der darauf befindlichen Behälter. Die Plattform ist durch vier Bolzen **33** und Befestigungsklammem am Tragseil befestigt.

Fig. 8 zeigt den Verlauf des Tragseils **30** durch die vier Stützen **17** und **18** und den Klapprahmen **15.** Um den Verlauf des Tragseils zu verdeutlichen, ist auch der an sich nicht sichtbare Verlauf im Klapprahmen **15** und innerhalb der vier Stützen **17** und **18** zeichnerisch dargestellt. Das endlose Tragseil **30** wird in einer Weise durch Klapprahmen **15** und Stützen **17** und **18** geführt, dass die vier Befestigungspunkte der Plattform **16** am Tragseil stets in die gleiche Richtung bewegt werden. Diese bevorzugte Ausgestaltung bewirkt nicht nur eine gleichgerichtete, sondern auch eine vollkommen gleichmäßige Höhenveränderung der Plattform. Das Tragseil **30** wird in den Stützen **17** und **18** und im Klapprahmen **15** verdeckt geführt, um sowohl eine Verletzungsgefahr als auch eventuelle Beschädigungen am Seil auszuschließen. Das Tragseil **30** kann aus jedem geeigneten, ausreichend festem Material bestehen, das das maximale Gewicht mehrerer beladener Behälter tragen kann, bevorzugt ein Stahl- oder Kunststoffseil. Das Tragseil wird um die Umlaufrollen **31** geführt. Diese sind jeweils im oberen und im unteren Bereich der vorderen Stützen **17** und der hinteren Stützen **18** angebracht. Zweckmäßigerweise verfügt die Seilkonstruktion über eine Seilspannungsvorrichtung; Seil und Umlaufrollen müssen gut zugänglich sein, um eine regelmäßige Wartung zu ermöglichen. Wird eine Höhenveränderung der Behälter vom Kunden gewünscht, so betätigt er die Verstellkurbel **28,** die als Griff, Kurbel, in Form einer Ratsche o.ä. ausgestaltet sein kann. Verläuft das Tragseil **30** wie in Fig. 8 dargestellt, so führt eine Bewegung der Verstellkurbel gegen den Uhrzeigersinn - bewirkt durch ein Zahnradgetriebe wie in Fig. 9 genauer dargestellt - eine Absenkung der Plattform, wie durch die eingezeichneten Pfeile dargestellt; bei Bewegung im Uhrzeigersinn wird die Plattform angehoben.

Fig. 9 zeigt in einer vergrößerten Darstellung Details zum Tragseilverlauf innerhalb einer hinteren Stütze **18** um eine Umlaufrolle **31,** zur Befestigung der Plattform **16** mittels eines Bolzens **33** und einer Befestigungsklammer **32** am Tragseil **30** und zur Mechanik der Verstellkurbel **28.** Diese ist mittels eines Zahnradgetriebes **37** mit der Umlaufrolle **31** verbunden und ist zur Erleichterung der Handhabung mit einer Übersetzung ausgestattet. Ein - hier nicht dargestellter - Feststellmechanismus verhindert ein ungewolltes Absenken der Plattform **16** samt Behältern **40.** Statt der manuellen Betätigung der Höhenverstellung kann ein anderer Antrieb, beispielsweise ein elektrischer oder hydraulischer vorgesehen werden. Es ist auch möglich, die Höhenverstellung mittels eines Fußpedals zu bewirken.
Erkennbar ist der Führungsschlitz **34** sowie der obere Anschlagpunkt **35,** der die Höhenverstellung der Plattform **16** auf eine festgelegte Höhe begrenzt.

### Erzielbare Vorteile

Die vorgeschlagene Lösung hat erhebliche Vorteile. Diese sind vor allem in folgenden Punkten zu sehen:
Das Ausladen aller Waren aus dem Einkaufswagen vor der Kassenerfassung sowie das Einladen der Ware in den Einkaufswagen nach der Kassenerfassung entfällt. Das manuelle Handhaben der einzelnen Artikel beim Erfassen durch die Kassierer entfällt. Das Kassenpersonal wird von körperlicher Arbeit entlastet. Das berührungslose Erfassen der Waren führt zu einer Beschleunigung des Kassenvorgangs. Ein Umpacken in Boxen, Taschen oder Tüten nach dem Kassenvorgang entfällt. Der Kunde kommt nicht mehr so leicht in Zeitdruck. Auch beim Einladen der Waren in einen PKW entfällt das Umpacken. Durch die Stapelbarkeit der Behälter und deren hohe Standfestigkeit ist der Einkauf während des Transports im PKW besser gegen Umfallen geschützt.

## Patentansprüche

1. Einkaufswagen und Behältersystem zum Transport von Waren in Selbstbedienungs-Supermärkten, Einkaufszentren oder dergleichen, bestehend aus einem Wagen mit länglicher Basis, 4 Rädern (24), einem Handgriff (23) und einer nach allen Seiten offenen höhenverstellbaren Plattform (16) und stapelbaren flachen, nicht mit dem Einkaufswagen fest verbundenen nach oben offenen Behältern (40) zur Aufnahme dieser Waren, **dadurch gekennzeichnet, dass** diese Plattform (16) an einem umlaufenden Tragseil (30), einer Kette oder dergleichen, die in senkrechten Stützen (17, 18) und einem klappbaren Rahmen (15) des Einkaufswagens verläuft, angebracht ist.

2. Einrichtung nach Anspruch 1 **dadurch gekennzeichnet, dass** die Plattform (16) mittels einer Verstellkurbel (28), eines Pedals oder dergleichen betätigt und vertikal verstellt und arretiert werden kann.

3. Einrichtung nach Anspruch 2 **dadurch gekennzeichnet, dass** die Höhenverstellung der Plattform zur Erleichterung der Handhabung mit einem Getriebe oder einer Übersetzung ausgestattet sein kann und manuell, elektrisch oder hydraulisch betrieben werden kann.

4. Einrichtung nach Anspruch 1 **dadurch gekennzeichnet, dass** die Behälter mit solchen Abstandshaltern (46) ausgestattet sind, damit sie sowohl aufeinander als auch ineinander stapelbar sind.

5. Einrichtung nach Anspruch 1 **dadurch gekennzeichnet, dass** die Behälter (40) eine so geringe Tiefe haben, dass die eingekauften Waren nebeneinander zu liegen kommen.

6. Einrichtung nach Anspruch 1 **dadurch gekennzeichnet, dass** der Klapprahmen (15) des Einkaufswagens und mit ihm die vorderen Stützen (17) verschwenkbar nach oben konstruiert sind, um ein Ineinanderstapeln der Einkaufswagen zu ermöglichen.

7. Einrichtung nach Anspruch 1 **dadurch gekennzeichnet, dass** sich im vorderen und hinteren Bereich des Einkaufswagens Ablagen (19, 20) befinden, die zur Aufnahme sperriger Güter und nicht benötigter Behälter (40) geeignet sind.

8. Einrichtung nach Anspruch 1 **dadurch gekennzeichnet, dass** am hinteren Verbindungsholm (22) und dem Handgriff (23) des Wagens ein Kindersitz (50) befestigt werden kann.

## Claims

1. Shopping trolley and container system for the transport of goods in self-service supermarkets, shopping centers or the like, consisting of a trolley with oblong base, 4 wheels (24), a handle (23) and a height-adjustable platform (16) open to all sides and containers (40) that are stackable, flat, not firmly attached with the trolley, open to the top to accommodate those goods, **characterised in that** this platform (16) is attached to a revolving cable (30), a chain or the like, contained in the vertical supports (17, 18) and a folding frame (15) of the shopping trolley.

2. Device according to claim 1 **characterised in that** the platform (16) may be operated by means of a crank (28), a pedal or the like, and vertically adjusted and locked.

3. Device according to claim 2 **characterised in that** the vertical adjustment of the platform can be equipped with a gear drive or translation for ease of operation, which can be operated manually, electrically, or hydraulically.

4. Device according to claim 1 **characterised in that** the containers are equipped with such spacers (46) so they are stackable on top as well as into each other.

5. Device according to claim 1 **characterised in that** the containers (40) have such a shallow depth that the purchased items rest next to each other.

6. Device according to claim 1 **characterised in that** the folding frame (15) of the shopping trolley and with it the front supports (17) are pivotable to the top, as to allow the shopping trolleys to nest within each other.

7. Device according to claim 1 **characterised in that** shelves (19, 20) are at the front and at the rear part of the shopping trolley to accommodate larger goods and containers (40) that are not required.

8. Device according to claim 1 **characterised in that** it is possible to attach a child seat (50) on the connecting bolt (22) and on the handle (23) of the trolley.

## Revendications

1. Caddie et système de récipients pour le transport de marchandises dans les supermarchés à libre-service, les galeries marchandes ou analogues, et qui se composent d'un chariot à base longitudinale, de 4 roues (24), d'une poignée (23), d'une plateforme (16) ouverte sur tous les côtés et de hauteur réglable, et de récipients (40) plats empilables, ouverts vers le haut et non rattachés de manière fixe au caddie, dont le rôle est de recevoir les marchandises, ce système étant **caractérisé par le fait que** cette plateforme (16) est montée sur un câble porteur rotatif (30), une chaîne ou analogue, et qui passe dans les piliers verticaux (17, 18) et sur un cadre rabattable (15) du caddie.

2. Le système de la revendication 1 est **caractérisé par le fait que** la plateforme (16) peut être actionnée au moyen d'une manivelle de réglage (28), d'une pédale ou analogue, et qu'elle peut être réglée et bloquée verticalement.

3. Le système de la revendication 2 est **caractérisé par le fait que** le réglage de la hauteur de la plateforme, pour en faciliter le maniement, peut être équipé d'un engrenage ou d'une transmission et qu'il peut fonctionner de manière manuelle, électrique ou hydraulique.

4. Le système de la revendication 1 est **caractérisé par le fait que** les récipients sont équipés d'écarteurs (46) afin d'être empilables tant l'un sur l'autre que l'un dans l'autre.

5. Le système de la revendication 1 est **caractérisé par le fait que** les récipients (40) sont d'une profondeur si réduite que les marchandises achetées sont couchées les unes à côté des autres.

6. Le système de la revendication 1 est **caractérisé par le fait que** le cadre rabattable (15) du caddie, et avec lui les piliers avant (17), peuvent être pivotés vers le haut, afin de pouvoir empiler les caddies l'un dans l'autre.

7. Le système de la revendication 1 est **caractérisé par le fait que** des surfaces de rangement se trouvent dans la partie avant et arrière (19, 20) du caddie et conviennent pour recevoir des articles volumineux et des récipients (40) superflus.

8. Le système de la revendication 1 est **caractérisé par le fait qu'**il est possible de fixer un siège pour enfants (50) sur le longeron de raccord arrière (22) et sur la poignée (23) du caddie.
